# EUROPEAN PATENT SPECIFICATION

(11) **EP 3 281 759 B1**
(45) Date of publication and mention of the grant of the patent: **25.07.2018**
(21) Application number: 16001773.7
(22) Date of filing: 10.08.2016
(51) Int. Cl.: B29C 45/00, B29C 45/43, B29C 45/33, B65D 47/08, B29L 31/56

(54) **PROCESS FOR MAKING SEALS FOR PACKAGING BY INJECTION IN MOULD**
VERFAHREN ZUR HERSTELLUNG VON DICHTUNGEN ZUR VERPACKUNG DURCH EINSPRITZEN
PROCÉDÉ DE FABRICATION DE JOINTS POUR EMBALLAGE PAR INJECTION DANS UN MOULE

(43) Date of publication of application: 14.02.2018
(73) Proprietor: ITC Packaging, S.L.U., 03440 Alicante (ES)
(72) Inventor: Sánchez, Pedro Galera, 03440 Alicante (ES)
(74) Representative: Rizzo, Sergio

(56) References cited:
- WO-A1-2009/111854
- WO-A1-2013/178234
- JP-A- S61 255 823
- US-A- 2 875 472
- US-A- 3 537 676
- US-A- 4 351 630
- US-A1- 2008 260 890

## Description

### Technical field of the invention

This invention belongs to the technical field of the injection moulding of seals for packaging, with moulds consisting of a fixed part and a moving part and in which the seal has a frame for connecting to the packaging, a cap and a hinged connection between both and means for coupling the cap to the frame as well as an additional tamperproof seal.

### Background to the Invention

Currently, many food product packages have seals consisting of a polyethylene cap but in recent years a type of seal has been introduced into the market that helps to preserve food in optimal conditions. These seals have a cap connected to a frame fixed to the packaging with the cap and frame connected by a hinge.

This type of seal is manufactured by injection with the assembly consisting of the cap, frame and hinge forming a single piece. Normally, this type of seal includes a dosing blade fixed to the frame which is released from it for the first use, being then fixed to one of the tongues under the cap so that the user need not contact the powdered product to take it whenever it is to be used.

The hinge connects the cap and the frame and is thinner to allow opening movements without breaking.

The seal is injected open so that its later preparation must be undertaken in a manual closing phase for stacking and transport.

This necessary manual handling of the pieces limits the productivity of the process since it greatly increases manufacturing time and increases the product's sanitary control tasks during its manufacture as well as increasing its cost.

The reference documents ES1069709 and ES1029543 can be mentioned as an example of the state of the technique.

The reference document ES1069709 refers to a cap for disposable packaging for wet towels, of the type consisting of an access opening for extracting towels. The cap of this packaging includes means for connecting the access opening of the packaging removably so that the cap can be used on other disposable packaging.

The cap has a base containing the means for connecting to the opening in the packaging, an intermediate support coupled to the base and an element for opening and closing this intermediate support. In addition, the cap with all these elements is manufactured in a single piece of injected plastic with the base, the intermediate support and the opening and closing element made in the unfolded position.

Thus, being manufactured in an unfolded position, it has the disadvantage that the opening and closing element and the intermediate support must be folded on the base to facilitate the transport and storage of these caps, requiring a phase to close the assembly which delays the process and increases production costs. In addition, the fact that the cap is closed after it has left the injection mould means that the plastic has cooled and therefore that the bending of the connection consisting of a thin and flexible strip forming a hinge generates stresses in this connector, material fatigue and, therefore, quicker breaking.

Reference document ES1029543 defines a complementary closure device for box and similar type packaging applicable to the opening on these packages once they have been opened initially and designed to recover the sealed situation, with two complementary and clearly different parts consisting of a ring fitted with means to fix it to the package opening and a cap equipped in turn with means for sealing on the ring. Both elements are related with a short strip forming a bridge between them with a weak transverse line that converts it into a hinge for folding the cap against the ring.

In this case, the definition of a packaging seal consisting of an element connecting it and a cap can be seen again. Although this document does not state explicitly the way in which this is done, it does state that it is a single-piece body injected in plastic so that, logically, it must be injected in the open position given that otherwise the parts forming it would form a single block that would be impossible to open.

Thus, the same disadvantages found in the previous document appear again, that is, a final manual phase is necessary to close the cap on the ring, which increases production times and makes the product more expensive. In addition, by closing the cap once the assembly has left the mould and the plastic has cooled, by bending the fine strip of plastic that forms the hinge, this undergoes stresses that reduce its strength as well as the number of openings and closings it can withstand before breaking. Therefore, this type of packaging seal usually always breaks at the hinge before the product in the packaging has been completely consumed.

In the case of this second document, there is an added problem since it concerns packaging for containing a food product and must therefore comply with certain sanitary standards. Therefore, the fact that all the caps must be closed manually requires setting up sanitary protocols for all the processes that involve intermediate storage, transfer of material, etc, which logically make the end product more expensive and reduce its productivity.

The document WO2009/111854 discloses a n in-mold closing mechanism is provided for a molding apparatus which produces a molded part having a lid hingedly attached thereto and rotatable about a hinge axis between an initial open configuration adjacent the part and a closed configuration covering an opening in the molded part and lockingly engaging the molded part. The mechanism includes a base to which a rotator arm is mounted at a base end of the rotator arm. The rotator arm is rotatable about an arm axis parallel to the hinge axis. A lid engaging arm is attached to the rotator arm opposite the base end and configured to engage the lid for moving the lid toward its closed configuration. A translator is connected to the base to move the base and in turn the rotator arm between a deployed position wherein the lid engaging arm can engage the lid and a non-deployed position, clear of the lid to allow closure of the molding apparatus. A rotator is connected to the rotator arm for rotating the arm about the arm axis.

The document WO2013/178234 discloses a dispensing closure comprising a base and a cover being attached to said base by a hinge and being movable between an opened and a closed position, said cover comprising an outer side-wall, wherein said dispensing closure also comprises tamper evident elements indicating whether said cover had been opened or not. The tamper- evident elements comprise a first latch element and a second latch element engaging with each other when said cover is in its closed position. The cover comprises a push-button region being arranged such that when being pushed by a user at least partly in a radial inward direction, the first latch element will be brought out of engagement with said second latch element.

The document US2875472 discloses a molding apparatus for container covers including an air actuated mold stripper. Finally, the document US2008/260890 discloses an apparatus and method for folding at least one hinged molded part each having a base portion and a projecting member. This includes at least one part removal mechanism that is located within the at least one mold station, wherein the at least one part removal mechanism each further includes a pivotally attached arm and the at least one part removal mechanism grips both the base portion and the projecting member of the at least one hinged molded part and removes the at least one hinged molded part from a mold half in the at least one mold station and then the pivotally attached arm folds the projecting member towards the base portion of the at least one hinged molded part. The pivotally attached arm can grip and remove the at least one folded part away from the at least one part removal mechanism.

### Description of the invention

The process for making the seal for packaging by injection in a mould where the mould consists of a first fixed base, a floating plate and a first moulding plate and a moving part with a second fixed base, an expulsion assembly and a second moulding plate, the seal being such that it includes a frame joining the packing, a cap and a hinged connection between both and where the seal includes means of coupling the cap to the frame and inviolability means for it as presented here, involves the phases described below.

A first phase consists of the closure of the moving and fixed parts of the mould, forming a space for moulding the seal between the first and second moulding plates. This moulding space has the form of the seal in the open position of the cap with respect to the frame where the cap is located over the frame in the same vertical plane.

Then there is a second phase of injection of material into the moulding space to make the seal.

Once the seal has been made by injection, there is a third phase of its pre-expulsion with respect to the fixed part of the mould.

Then, the fourth phase consists of the opening of the mould by the separation of the moving part in which the seal is held with respect to the fixed part.

With the mould already open, there is a fifth phase of freeing the cap from the moving part of the mould and its descent over the frame by compressed air through a compressed air circuit located inside the mould.

Finally, there is a sixth phase of the final expulsion of the seal from the mould and its collection by an expulsion robot. During the expulsion, this robot presses the cap on the frame so that it is fixed to it by coupling means and the means of inviolability are closed.

In accordance with the invention, the impulsion of compressed air undertaken in the phase of freeing the cap is undertaken on its upper level.

In accordance with a preferred undertaking, the third phase of the pre-expulsion of the seal involves a first horizontal movement of the floating plate towards the moving part of the mould so that this moving part moves together with the floating plate and the first moulding plate remains fixed, connected to the first fixed base and a vertical movement of sliders in the moving part of the mould. Both the first horizontal movement and the vertical movement are undertaken simultaneously.

These sliders hold the injected seal at its upper and lower ends. Their vertical movement is undertaken in the divergent direction with respect to the seal such that the seal is freed from these sliders.

Thus, the first horizontal movement of the floating plate involves two stages, a first stage in which the floating plate moves for a horizontal distance H1 and a skid on the fixed part moves by this same horizontal distance H1 accompanying the injected seal in its movement and a second stage in which the floating plate moves for a horizontal distance H2 and this skid remains fixed in the position reached in the first stage.

In accordance with another aspect and in a preferred undertaking, the fifth phase of freeing the cap involves a second horizontal movement of the expulsion assembly of the moving part.

This expulsion assembly moves a distance H3 in the opposite direction to the first horizontal movement of the floating plate and before the compressed air impulsion. The second fixed base and the second moulding plate remain fixed in their positions.

This expulsion assembly on the moving part consists of a seal expulsion element and a first and second moving plate. The first moving plate is located in an intermediate position between the second fixed base and the second moving plate and the expulsion element crosses through the second moulding plate of the moving part and presents a first end connected to the first moving plate and a second end in contact with the injected seal.

In this case and in accordance with a preferred undertaking, the sixth phase of the final expulsion of the seal involves a third horizontal movement of a distance H4 in the same direction as the second horizontal movement of both the first moving plate of the moving part and the seal expulsion element. During this third horizontal movement, the second moving plate remains fixed in the position reached after the second movement.

In accordance with a preferred undertaking, the means of coupling the cap to the frame consist of at least several adjustment tabs that couple together and are arranged in the cap and the frame, respectively.

In accordance with a preferred undertaking, the inviolability means consist of a removable strip in the frame and an inviolability tab coupled to it and located in the cap.

In a preferred undertaking, the seal contains a dosing blade inside it, fixed to the frame.

In this case and in accordance with a preferred undertaking, the seal includes tongues fixing the dosing blade after its use inside the cap,

With the process of manufacturing the seal for packaging by injection in a mould as proposed here, a significant improvement in the state of the technique is obtained.

This is because a process for making these seals is achieved in which the cap and the frame of the seal are injected in a vertical position but in which the cap is closed on the frame immediately after injection.

Thus, because.the cap is closed during the seal manufacture process itself, when it is extracted and because all is undertaken mechanically, a seal is obtained in which no human action is involved at any time and, therefore, its manufacture complies with the necessary sanitary conditions for use with food packaging without the need to apply costly sanitary processes that slow down the process.

Likewise, since a final phase to close the cap on the frame is not needed, eliminating precisely this phase in which the human factor is much slower than the rest of the process, this is must quicker and an important increase in its productivity is obtained.

In addition, costs are reduced by eliminating both labour and the exhaustive sanitary control required on these workers and the process undertaking times are reduced.

Therefore, a seals manufacturing process is obtained that provides an important improvement over existing processes in the state of the technique since it eliminates their disadvantages and improves the productivity of the process.

### Brief description of the drawings

To help in the better understanding of the properties of the invention, in accordance with a preferred example of its practical undertaking, a series of drawings is supplied as an integral part of the description that are illustrative and not limiting, showing the following.
Figures 1.1 and 1.2. show a schematic view in cross section of the injection mould in a first phase of the process of manufacturing the packaging seal by injection in a mould and a detailed view A, respectively, for a preferred manner of undertaking the invention.
Figures 2.1 and 2.2. show a schematic view in cross section of the injection mould in the first stage of the third phase of the process of manufacturing the packaging seal by injection in a mould and a detailed view B, respectively, for a preferred manner of undertaking the invention.
Figure 3 shows a schematic view in cross section of the injection mould in the second stage of the third phase of the process of manufacturing the packaging seal by injection in a mould, for a preferred manner of undertaking the invention.
Figure 4 shows a schematic view in cross section of the injection mould in a fourth phase of the process of manufacturing the packaging seal by injection in a mould, for a preferred manner of undertaking the invention.
Figure 5 shows a schematic view in cross section of the injection mould in a fifth phase of the process of manufacturing the packaging seal by injection in a mould, for a preferred manner of undertaking the invention.
Figures 6.1 and 6.2 show a schematic view in cross section of the injection mould in a sixth phase of the process of manufacturing the packaging seal by injection in a mould and a detailed view C, respectively, for a preferred manner of undertaking the invention.

### Detailed description of a preferred manner of undertaking the invention

In the supplied figures, it can be seen how in a preferred manner of undertaking the invention, the process of manufacturing the seal (1) for packaging by injection in a mould proposed here, requires a mould (2) consisting of a fixed part (2.1) with a first fixed base (3), a floating plate (4) and a first moulding plate (5) and a moving part (2.2) with a second fixed base (6), an expulsion assembly and a second moulding plate (7) and where the seal (1) to be manufactured consists of a frame (8) connecting to the packaging, a cap (9) and a hinged connection (10) between both, as well as means of coupling the cap to the frame and means for Its Inviolability.

This manufacturing process involves the following phases.

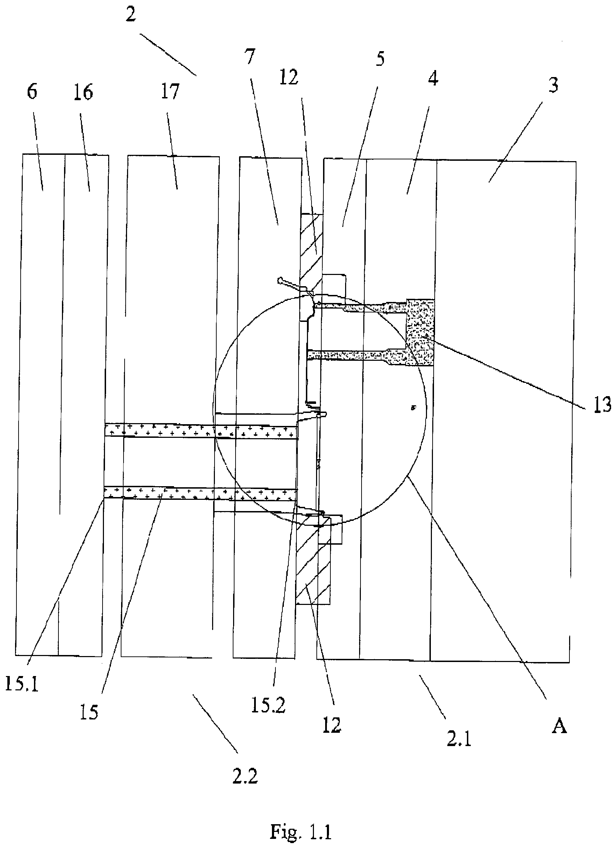

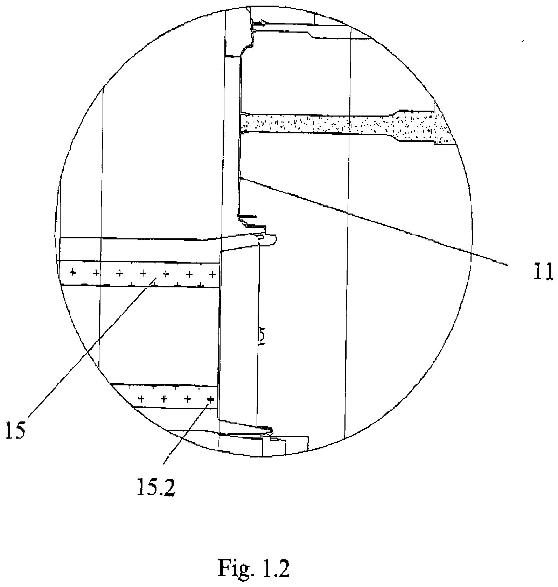

As shown in Figure 1.1, a first phase is the closure of the moving part (2.2) and the fixed part (2.1) of the mould (2). On closure, a moulding space (11) is generated between the first and second moulding plates (5, 7) with the shape of the seal (1). This moulding space (11), which can be seen in greater detail in Figure 1.2, is in the form of the seal in an open position of the cap (9) with respect to the frame (8) and with the cap (9) located on the frame (8) in the same vertical plane.

The second phase (not shown in the figures) that follows is the injection of the material to make the seal (1) into the moulding space (11).

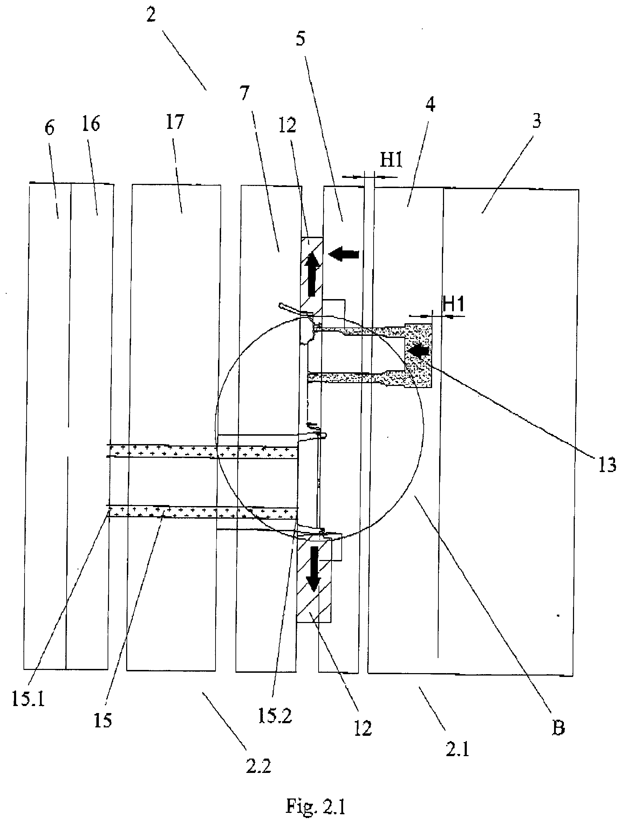

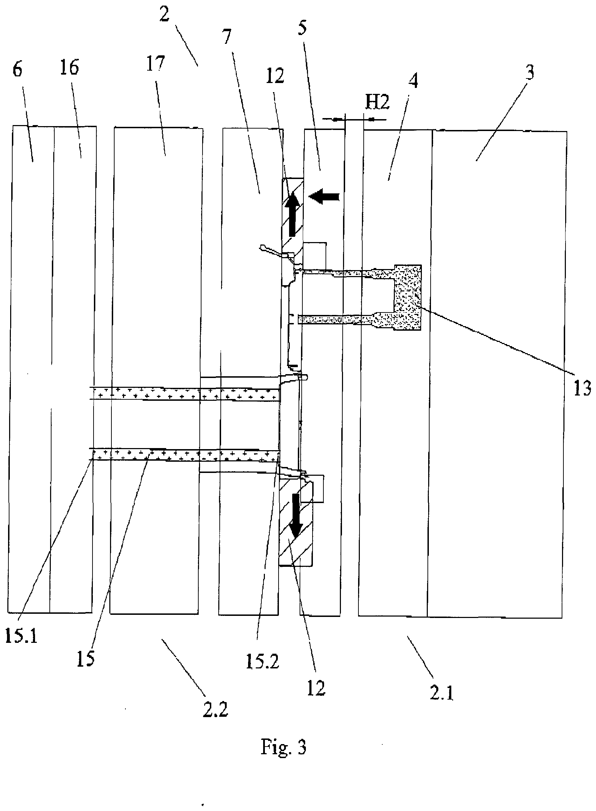

The third phase is shown in Figures 2.1 and 3 and consists of the pre-expulsion of the manufactured seal (1). During this pre-expulsion phase, the seal (1) is separated from the fixed part (2.1) of the mould (2).

In this preferred manner of undertaking the invention, this third seal (1) pre-expulsion phase involves a first horizontal movement of the floating plate (4) towards the moving part (2.2) of the mould (2), during which the joint movement of this moving part (2.2) of the mould (2) is generated, while the first moulding plate (5) remains fixed, joined to the first fixed base (3).

Likewise, as can be seen in Figures 2.1 and 3, simultaneously with the first horizontal movement, there is a vertical movement of sliders (12) on the moving part (2.2) of the mould (2).

These sliders (12) hold the upper and lower ends of the injected seal (1) and move vertically away from the seal (1) such that these sliders (12) release its ends.

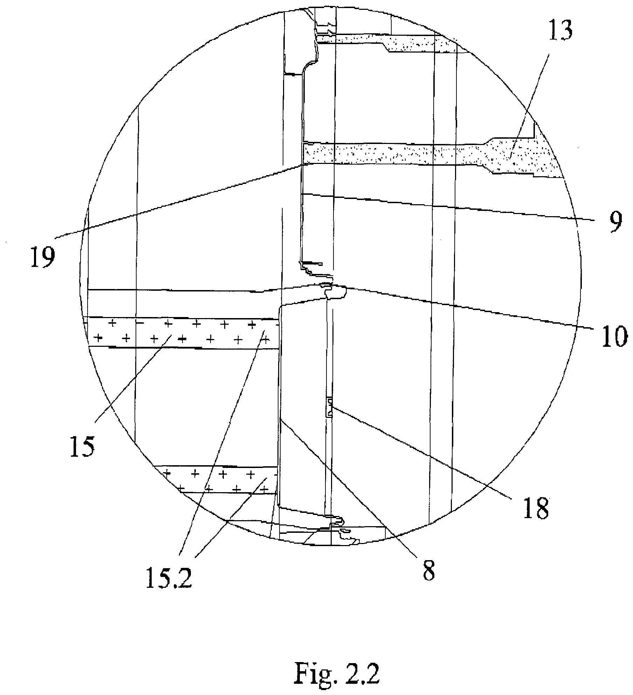

Regarding the first horizontal movement of the floating plate (4), this occurs in two stages. The first stage can be seen in Figure 2.1 and involves the movement of the floating plate (4) and of a skid (13) on the fixed part (2.1) that accompanies the injected seal (1) in its movement over a horizontal distance H1. Figure 2.2, shows the injected seal in detail, which is pushed by the skid (13).

As shown in Figure 3, the second stage consists of the horizontal movement of the floating plate (4) for a distance H2, where the skid (13) that accompanied the seal (1) in the first stage remains fixed during this second stage in the position reached in the first stage.

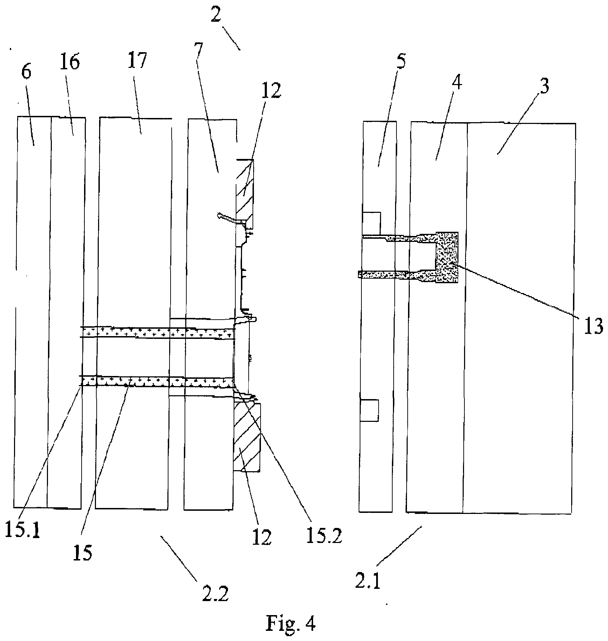

There is then a fourth phase, shown in Figure 4, which consists of the opening of the mould (2) through the separation of the moving part (2.2) in which the seal (1) is held from the fixed part (2.1).

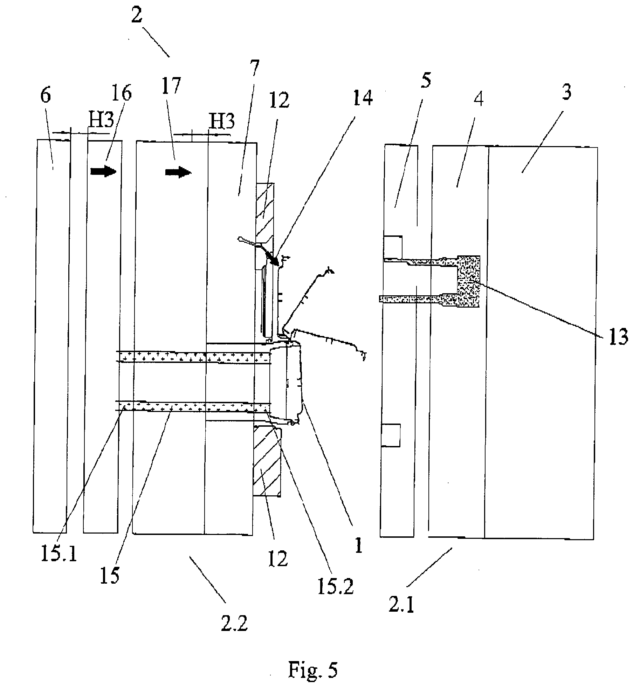

Figure 5 shows the fifth phase in which the cap (9) is freed from the moving part (2.2) of the mould (2) and its descent on the frame (8) by the impulsion of compressed air (14) through a compressed air circuit (not shown in the figures) inside the mould (2). As the cap (9) descends, the hinged connection (10) between the cap (9) and the frame (8) is folded while the seal (1) is still fixed to part of the mould (2) and is still hot. Thus the material of the seal (1) finishes crystallising in the closed position, avoiding the generation of stresses while closing the cap (9), thus considerably increasing the useful life of the hinged connection (10) and, therefore, of the seal (1).

In this preferred manner of undertaking the invention this impulsion of compressed air (14) takes place on the upper level of the cap (9).

As shown in Figure 5, in this preferred manner of undertaking the invention, this freeing of the cap (9) involves a second horizontal movement of the expulsion assembly of the moving part (2.2) in the opposite direction of the first horizontal movement of the floating plate (4) and before the impulsion of compressed air (14). This second movement is over a distance H3.

During this second movement, the second fixed base (6) and the second moulding plate (7) remain fixed in their positions.

In this preferred manner of undertaking the invention, the expulsion assembly of the moving part consists of an expulsion element (15) for the seal (1) and a first and second moving plate. The first moving plate (16) is located in an intermediate position between the second fixed base (6) and the second moving plate (17) and the expulsion element (15) crosses through the second moulding plate (7) of the moving part (2.2) with a first end (15.1) connected to the first moving plate (16) and a second end (15.2) in contact with the injected seal (1).

Thus, when the expulsion assembly moves and the second moulding plate (7) remains fixed, the expulsion element (15). In contact with the injected seal (1), pushes it, removing it from the second moulding plate (7).

The sixth phase of the process then takes place, the final expulsion of the seal (1) from the mould (2) and its collection by an expulsion robot.

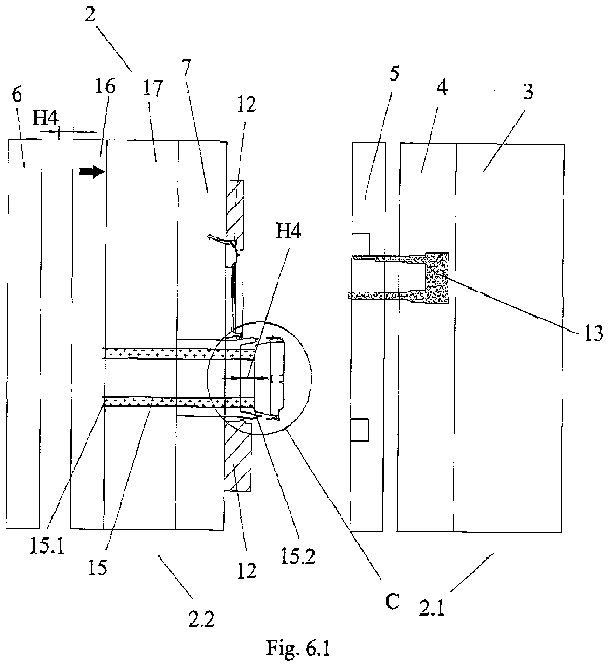

In this preferred manner of undertaking the invention, as shown in Figure 6.1, this sixth phase involves a third horizontal movement of the first moving plate (16) of the moving part (2.2) and of the seal (1) expulsion element (15), in the same direction as the second horizontal movement of the expulsion assembly and for a distance H4. During this third horizontal movement, the second moving plate (17) remains fixed in the position reached after the second movement.

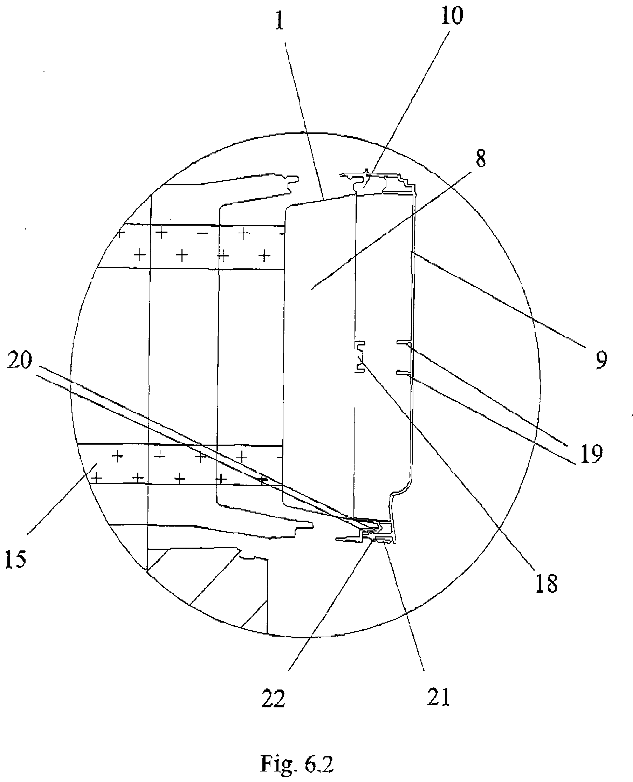

Thus, as can be seen in Figure 6.2, the injected seal (1) is fully extracted from the plates forming the moving part (2.2) of the mould (2), facilitating access to it by an expulsion robot (not shown in the figures).

Thus, this expulsion robot collects the injected seal (1) and makes a movement that presses the cap (9) on the frame (8) such that the seal (1) couplings fit and, likewise, the inviolability means are closed.

In this preferred manner of undertaking the invention, as shown in Figure 6.2, the means for coupling the cap (9) to the frame (8) consist of several adjustment tabs (20) that couple together with one in the cap (9) and the other in the frame (8), in the areas of both opposite the hinged connection (10).

Likewise, in this preferred manner of undertaking the invention, the inviolability means are formed by a removable strip (21) in the frame (8) and an inviolability tab (22) that couples in it and located in the cap (9).

In this preferred manner of undertaking the invention the seal contains a dosing blade (18) fixed to the frame (8) and in addition the seal (1) includes fixing tongues (19) inside the cap (9) to hold this dosing blade (19) after its use.

The undertaking form described is only one example of this invention, so that the specific details, terms and phrases used in this memorandum must not be considered limiting but must be understood only as a base for the claims and as a representative base that provides an understandable description as well as sufficient information for the expert in the matter to apply this invention.

With the process of manufacturing a packaging seal by injection in a mould presented here, important improvements are achieved with respect to the state of the technique.

Firstly it must be emphasized that in the process described here, the product obtained is a closed seal in which no manual phase is involved at any time since it is completely automated.

This great advantage gives greater speed in undertaking the complete process, a reduction in sanitary control costs since the product is not handled by the workers and, therefore greater process productivity.

An additional advantage is also obtained that is of great relevance since by closing the cap on the frame while these are still fixed to the moving part of the mould, which was just opened after making the seal, this seal has not had time to cool or crystallise completely so that the hinged connection is folded to close the cap and is in this position when the material of which the seal is made finishes crystallising, Thus the internal stresses in the area of the hinged connection are eliminated, preventing reductions in its strength that cause the early breaking of the hinged connection.

This is therefore a very effective process for manufacturing seals which achieves the closed seal simply and without increasing undertaking times, increasing sanitary conditions and reducing costs.

## Claims

1. Process for manufacturing a seal (1) for packaging by injection in a mould, in which the mould (2) consists of a fixed part (2.1) with a first fixed base (3), a floating plate (4) and a first moulding plate (5) and a moving part (2.2) with a second fixed base (6), an expulsion assembly and a second moulding plate (7), the seal (1) consisting of a frame (8) connecting to the packaging, a cap (9), a hinged connection (10) between both, means of coupling the cap (9) to the frame (8) and means for its inviolability comprising the following phases:
closure of the moving part (2.2) and the fixed part (2.1) of the mould (2), forming between the first and the second moulding plates (5, 7) a moulding space (11) for the seal (1) with the cap (9) in the open position with respect to the frame (8), where the cap (9) is located over the frame (8) in the same vertical plane; and
injection of the material to make the seal (1) into the moulding space (11); whereas the process further comprises the steps of: pre-expulsion of the seal (1) from the fixed part (2.1) of the mould (2);
the pre-expulsion further involving a first horizontal movement of the floating plate (4) towards the moving part (2.2) of the mould (2) during which the joint movement of this moving part (2.2) of the mould (2) is generated, while the first moulding plate (5) remains fixed, joined to the first fixed base (3);
opening of the mould (2) through the separation of the moving part (2.2) in which the seal (1) is held from the fixed part (2.1);
freeing of the cap (9) from the moving part (2.2) of the mould (2) and its descent on the frame (8) through the impulsion of compressed air (14) through a compressed air circuit inside the mould (2)
wherein as the cap (9) descends the hinged connection (10) between the cap (9) and the frame (8) is folded while the seal (1) is still fixed to part of the mould (2) and is still hot;
and wherein the impulsion of compressed air (14) takes place on the upper level of the cap (9);
final expulsion of the seal (1) from the mould and its collection by an expulsion robot; in which during the expulsion this robot presses the cap (9) on the frame (8) so that it is fixed to it by coupling means and the inviolability means are closed.

2. Process for manufacturing the seal (1) for packaging by injection in a mould, as in any of the above claims, **featuring** the pre-expulsion of the seal (1) consisting of a first horizontal movement of the floating plate (4) towards the moving part (2.2) of the mould (2), where this moving part (2.2) moves together with the floating plate (4) and the first moulding plate (5) remains fixed, joined to the first fixed base (3) and a vertical movement of sliders (12) in the moving part (2.2) of the mould (2) that hold the injected seal (1) at its upper and lower ends, this vertical movement being in the divergent direction with respect to the seal (1) such that these sliders (12) release its ends, where both movements are made simultaneously and where the first horizontal movement of the floating plate (4) presents a first stage in which this floating plate (4) moves for a horizontal distance (H1) and where a skid (13) on the fixed part (2.1) moves by this same horizontal distance (H1) accompanying the injected seal (1) in its movement and a second stage in which the floating plate (4) moves by a horizontal distance (H2) and this skid (13) remains fixed in the position reached in the first stage.

3. Process for manufacturing the seal (1) for packaging by injection in a mould, as in any of the above claims, **featuring** the freeing of the cap (9) with a second horizontal movement of the expulsion assembly on the moving part (2.2), such that this expulsion assembly moves by a distance (H3) with respect to the second fixed base (6) and the second moulding plate (7) which remain fixed in their positions, in the opposite direction to the first horizontal movement of the floating plate (4) and before the impulsion of compressed air (14), where the expulsion assembly on the moving part (2.2) consists of a seal (1) expulsion element (15) and a second moving plate, the first moving plate (16) being in an intermediate position between the second fixed base (6) and the second moving plate (17), where the expulsion element (15) crosses through the second moulding plate (7) of the moving part (2.2) and has a first end (15.1) connected to the first moving plate (16) and a second end (15.2) in contact with the injected seal (1).

4. Process for manufacturing the seal (1) for packaging by injection in a mould, as in claim 3, featuring the final expulsion of the seal (1) with a third horizontal movement for a distance (H4) in the same direction as the second horizontal movement, of the first moving plate (16) and of the seal expulsion element (15), where the second moving plate (17) remains fixed in the position reached after that second movement.

5. Process for manufacturing the seal (1) for packaging by injection in a mould, as in any of the above claims, **featuring** the means for coupling the cap (9) to the frame (8) being formed of at least several adjustment tabs (20) that couple together and are arranged in the cap (9) and the frame (8), respectively.

6. Process for manufacturing the seal (1) for packaging by injection in a mould, as in any of the above claims, **featuring** the inviolability means formed by a removable strip (21) in the frame (8) and an inviolability tab (22) coupled in it and located in the cap (9).

7. Process for manufacturing the seal (1) for packaging by injection in a mould, as in any of the above claims, **featuring** the seal (1) with a dosing blade (18) inside it, fixed to the frame (8).

8. Process for manufacturing the seal (1) for packaging by injection in a mould, as in claim 7, **featuring** the seal (1) with fixing tongues (19) for the dosing blade (18) after its use, inside the cap (9).

## Patentansprüche

1. Verfahren zur Herstellung eines Verschlusses (1) für eine Verpackung durch Einspritzen in eine Form, bei dem die Form (2) aus einem feststehenden Teil (2.1) mit einem ersten feststehenden Sockel (3), einer gleitenden Platte (4) und einer ersten Formplatte (5) und einem beweglichen Teil (2.2) mit einem zweiten feststehenden Sockel (6), einer Ausstoßvorrichtung und einer zweiten Formplatte (7) besteht, wobei der Verschluss (1) aus Folgendem besteht: einem mit der Verpackung verbundenen Rahmen (8), einem Deckel (9), einer Scharnierverbindung (10) zwischen beiden, Elementen zur Verbindung des Deckels (9) mit dem Rahmen (8) und Elementen für ihre Unverletzbarkeit, wobei das Verfahren die folgenden Phasen umfasst:
Schließen des beweglichen Teils (2.2) und des feststehenden Teils (2.1) der Form (2), wobei zwischen der ersten und der zweiten Formplatte (5, 7) ein Formraum (11) für den Verschluss (1) mit dem Deckel (9) in der offenen Position bezüglich des Rahmens (8) gebildet wird, wobei sich der Deckel (9) über dem Rahmen (8) in der gleichen vertikalen Ebene befindet; und Einspritzen des Materials zur Herstellung des Verschlusses (1) in den Formraum (11); wobei das Verfahren weiterhin die folgenden Schritte umfasst:
Vortrieb des Verschlusses (1) aus dem festen Teil (2.1) der Form (2); wobei der Vortrieb ferner eine erste horizontale Bewegung der gleitenden Platte (4) zum beweglichen Teil (2.2) der Form (2) umfasst, bei der die gemeinsame Bewegung dieses beweglichen Teils (2.2) der Form (2) erfolgt, während die erste Formplatte (5) fest bleibt, mit dem ersten festen Sockel (3) verbunden;
Öffnen der Form (2) durch die Trennung des beweglichen Teils (2.2), wobei der Verschluss (1) vom festen Teil (2.1) gehalten wird;
Lösen des Deckels (9) vom beweglichen Teil (2.2) der Form (2) und dessen Absenken auf den Rahmen (8) durch das Einpressen von Druckluft (14) durch einen Druckluftkreislauf innerhalb der Form (2),
wobei beim Absenken des Deckels (9) die Scharnierverbindung (10) zwischen dem Deckel (9) und dem Rahmen (8) zusammengeklappt wird, während der Verschluss (1) noch an einem Teil der Form (2) befestigt und noch heiß ist;
und wobei der Druckluftimpuls (14) auf die obere Ebene des Deckels (9) erfolgt;
endgültiger Ausstoß des Verschlusses (1) aus der Form und dessen Entnahme durch einen Ausstoßroboter, wobei dieser während des Ausstoßens den Deckel (9) so auf den Rahmen (8) drückt, dass er durch Verbindungselemente daran befestigt wird und die Unverletzbarkeitselemente geschlossen werden.

2. Verfahren zur Herstellung des Verschlusses (1) für eine Verpackung durch Einspritzen in eine Form nach allen obigen Ansprüchen, **bei dem** der Vortrieb des Verschlusses (1) aus einer ersten horizontalen Bewegung der gleitenden Platte (4) zum beweglichen Teil (2.2) der Form (2) hin besteht, wobei sich dieses bewegliche Teil (2.2) zusammen mit der gleitenden Platte (4) bewegt und die erste Formplatte (5) fest bleibt, verbunden mit dem ersten festen Sockel (3), und einer vertikalen Bewegung von Schiebern (12) im beweglichen Teil (2.2) der Form (2), die den gespritzten Verschluss (1) an ihrem oberen und unteren Ende halten, wobei diese vertikale Bewegung in abweichender Richtung in Bezug auf den Verschluss (1) erfolgt, so dass diese Schieber (12) seine Enden freigeben, wobei beide Bewegungen gleichzeitig ausgeführt werden und wobei die erste horizontale Bewegung der gleitenden Platte (4) aus einer erste Phase besteht, in der sich diese gleitende Platte (4) um einen horizontalen Abstand (H1) bewegt und sich ein Schlitten (13) auf dem feststehenden Teil (2.1) um den gleichen horizontalen Abstand (H1) bewegt, wobei er den gespritzten Verschluss (1) in seiner Bewegung begleitet, und einer zweiten Phase, in der sich die gleitende Platte (4) um einen horizontalen Abstand (H2) bewegt und dieser Schlitten (13) in der in der ersten Phase erreichten Position verbleibt.

3. Verfahren zur Herstellung des Verschlusses (1) für eine Verpackung durch Einspritzen in eine Form nach einem der obigen Ansprüche, **bei dem** die Freigabe des Deckels (9) mit einer zweiten horizontalen Bewegung der Ausstoßvorrichtung auf dem beweglichen Teil (2.2) erfolgt, so dass sich diese Ausstoßvorrichtung um einen Abstand (H3) in Bezug auf den zweiten festen Sockel (6) und die zweite Formplatte (7) bewegt, die in ihren Positionen verbleiben, in der entgegengesetzten Richtung zur ersten horizontalen Bewegung der gleitenden Platte (4) und vor dem Einpressen von Druckluft (14), wobei die Ausstoßvorrichtung auf dem beweglichen Teil (2.2) aus einem Ausstoßelement (15) für den Verschluss (1) und einer zweiten beweglichen Platte besteht, wobei sich die erste bewegliche Platte (16) in einer Zwischenstellung zwischen dem zweiten festen Sockel (6) und der zweiten beweglichen Platte (17) befindet, wobei das Ausstoßelement (15) die zweite Formplatte (7) des beweglichen Teils (2.2) durchquert und ein erstes Ende (15.1) hat, das mit der ersten beweglichen Platte (16) verbunden ist, und ein zweites Ende (15.2), das sich in Kontakt mit dem gespritzten Verschluss (1) befindet.

4. Verfahren zur Herstellung des Verschlusses (1) für eine Verpackung durch Einspritzen in eine Form nach Anspruch 3, **bei dem** der endgültige Ausstoß des Verschlusses (1) mit einer dritten horizontalen Bewegung über einen Abstand (H4) in der gleichen Richtung wie die zweite horizontale Bewegung der ersten beweglichen Platte (16) und des Elements zum Ausstoßen des Verschlusses (15) erfolgt, wobei die zweite bewegliche Platte (17) in der nach dieser zweiten Bewegung erreichten Position verbleibt.

5. Verfahren zur Herstellung des Verschlusses (1) für eine Verpackung durch Einspritzen in eine Form nach einem der obigen Ansprüche, **bei dem** die Elemente zur Verbindung des Deckels (9) mit dem Rahmen (8) aus mindestens mehreren, im Deckel (9) bzw. Rahmen (8) angeordneten, miteinander verbundenen Verstelllaschen (20) gebildet werden.

6. Verfahren zur Herstellung des Verschlusses (1) für eine Verpackung durch Einspritzen in eine Form nach einem der obigen Ansprüche, **bei dem** die Unverletzbarkeitselemente durch einen abnehmbaren Streifen (21) im Rahmen (8) und ein damit verbundenes und im Deckel (9) befindliches Unversehrtheitsetikett (22) gebildet werden.

7. Verfahren zur Herstellung des Verschlusses (1) für eine Verpackung durch Einspritzen in eine Form nach einem der obigen Ansprüche, **bei dem** der Verschluss (1) mit einer darin befindlichen, am Rahmen (8) befestigten Dosierklinge (18) versehen ist.

8. Verfahren zur Herstellung des Verschlusses (1) für eine Verpackung durch Einspritzen in eine Form nach Anspruch 7, **bei dem** der Verschluss (1) mit Fixierzungen (19) für die Dosierklinge (18) nach deren Verwendung versehen ist, die sich im Inneren des Deckels (9) befinden.

## Revendications

1. Méthode de fabrication d'un joint (1) pour emballage par injection dans un moule, dans lequel le moule (2) est constitué d'une partie fixe (2.1) avec une première base fixe (3), d'un plateau flottant (4) et une première plaque de moulage (5) et une pièce mobile (2.2) avec une seconde base fixe (6), un ensemble d'expulsion et un second plateau de moulage (7), le joint (1) consistant en un cadre (8) reliant l'emballage, un capuchon (9), une liaison articulée (10) entre les deux, des moyens de couplage du capuchon (9) au cadre (8) et des moyens pour son inviolabilité, comprenant les phases suivantes :
fermeture de la partie mobile (2.2) et de la partie fixe (2.1) du moule (2), formant entre les premiers et deuxièmes plateaux de moulage (5, 7) un espace de moulage (11) pour le joint (1) avec le capuchon (9) en position ouverte par rapport au cadre (8), où le capuchon (9) est situé au-dessus du cadre (8) dans le même plan vertical ; et injection du matériel pour réaliser le joint (1) dans l'espace de moulage (11) ; tandis que le procédé comprend en outre les étapes de :
pré-expulsion du joint (1) de la partie fixe (2.1) du moule (2) ;
la pré-expulsion impliquant en outre un premier déplacement horizontal du plateau flottant (4) vers la partie mobile (2.2) du moule (2) au cours duquel le déplacement commun de cette partie mobile (2.2) du moule (2) est générée, tandis que le premier plateau de moulage (5) reste fixe, relié à la première base fixe (3) ;
ouverture du moule (2) par la séparation de la partie mobile (2.2) dans laquelle le joint (1) est maintenu par rapport à la partie fixe (2.1) ;
Libération du capuchon (9) de la partie mobile (2.2) du moule (2) et sa descente sur le cadre (8) par l'impulsion d'air comprimé (14) à travers un circuit d'air comprimé, le moule (2)
dans lequel le capuchon (9) descend le raccord articulé (10) entre le capuchon (9) et le cadre (8) est plié alors que le joint (1) est encore fixé à une partie du moule (2) et est encore chaud ;
et dans lequel l'impulsion d'air comprimé (14) a lieu au niveau supérieur du capuchon (9) ;
expulsion finale du joint (1) du moule et sa collecte par un robot d'expulsion ; dans lequel, pendant l'expulsion, ce robot presse le capuchon (9) sur le cadre (8) afin qu'il lui soit fixé par des moyens de couplage et que les moyens d'inviolabilité soient fermés.

2. Procédé de fabrication du joint (1) pour emballage par injection dans un moule, comme dans une des revendications ci-dessus, comprenant la pré-expulsion du joint (1) consistant en un premier déplacement horizontal du plateau flottant (4) vers la partie mobile (2.2) du moule (2), où cette partie mobile (2.2) se déplace avec le plateau flottant (4) et le premier plateau de moulage (5) reste fixe, reliée à la première base fixe (3) et un déplacement vertical de glisseurs (12) dans la partie mobile (2.2) du moule (2) qui supporte le joint injecté (1) à ses extrémités supérieure et inférieure, ce déplacement vertical étant dans la direction divergente par rapport au joint (1) de telle sorte que ces glisseurs (12) libèrent ses extrémités, où les deux déplacements sont effectués simultanément et où le premier déplacement horizontal du plateau flottant (4) présente un premier étage dans lequel ce plateau flottant (4) se déplace sur une distance horizontale (H1) et où un patin (13) sur la partie fixe (2.1) se déplace de cette même distance horizontale (H1) accompagnant le joint injecté (1) dans son déplacement et un deuxième étage dans lequel le plateau flottant (4) se déplace d'une distance horizontale (H2) et ce patin (13) reste fixé dans la position atteinte dans le premier étage.

3. Procédé de fabrication du joint (1) pour emballage par injection dans un moule, comme dans une des revendications ci-dessus, **comprenant la** libération du capuchon (9) avec un second déplacement horizontal de l'ensemble d'expulsion sur la partie mobile (2.2), de telle sorte que cet ensemble d'expulsion se déplace d'une distance (H3) par rapport à la seconde base fixe (6) et le second plateau de moulage (7) qui restent fixes dans leurs positions, dans la direction opposée au premier déplacement horizontal du plateau flottant (4) et avant l'impulsion de l'air comprimé (14), où l'ensemble d'expulsion sur la partie mobile (2.2) se compose d'un élément d'expulsion (15) d'étanchéité (1) et d'un deuxième plateau mobile, le premier plateau mobile (16) se trouvant dans une position intermédiaire entre la deuxième base fixe (6) et le deuxième plateau (17), où l'élément d'expulsion (15) traversant le deuxième plateau de moulage (7) de la partie mobile (2.2) et présentant une première extrémité (15.1) connectée au premier plateau mobile (16) et une deuxième extrémité (15.2) en contact avec le joint injecté (1).

4. Procédé de fabrication du joint (1) pour emballage par injection dans un moule, selon la revendication 3, **comportant** l'expulsion finale du joint (1) avec un troisième déplacement horizontal, pour une distance (H4) dans le même sens que le deuxième déplacement horizontal, du premier plateau mobile (16) et de l'élément d'expulsion de joint (15), le deuxième plateau mobile (17) restant fixe dans la position atteinte après ce deuxième déplacement.

5. Procédé de fabrication du joint (1) pour emballage par injection dans un moule, comme dans l'une quelconque des revendications ci-dessus, **montrant** les moyens de couplage du capuchon (9) au cadre (8) étant formés d'au moins plusieurs languettes de réglage (20) qui se couplent ensemble et sont disposées dans le capuchon (9) et le cadre (8), respectivement.

6. Procédé de fabrication du joint (1) pour emballage par injection dans un moule, comme dans une des revendications ci-dessus, **montrant** les moyens d'inviolabilité formés par une .bande amovible (21) dans le cadre (8) et une languette d'inviolabilité (22) couplée et située dans le capuchon (9).

7. Procédé de fabrication du joint (1) pour emballage par injection dans un moule, comme dans une des revendications ci-dessus, **montrant** le joint (1) avec une lame de dosage (18) à l'intérieur, fixée au cadre (8).

8. Procédé de fabrication du joint (1) pour emballage par injection dans un moule, selon la revendication 7, **comportant** l'expulsion du joint (19) avec des languettes de fixation (19) pour la lame de dosage (18) après son utilisation, à l'intérieur du capuchon (9).
